# EUROPEAN PATENT APPLICATION

(11) **EP 3 168 776 A1**
(43) Date of publication of application: **17.05.2017**
(21) Application number: 16182244.0
(22) Date of filing: 01.08.2016
(51) Int. Cl.: G06K 9/00, A63F 13/00

(54) **IMAGE RECOGNITION METHOD AND DEVICE FOR GAME**

(30) Priority: 13.11.2015 CN 201510778586
(71) Applicant: Xiaomi Inc., Beijing 100085 (CN)
(72) Inventor: CHEN, Zhijun, Haidian District, Beijing 100085 (CN); HOU, Wendi, Haidian District, Beijing 100085 (CN); WANG, Pingze, Haidian District, Beijing 100085 (CN)
(74) Representative: Robson, Aidan John

(57) **Abstract**

Disclosed is an image recognition method and device for a game, which belongs to the field of image processing. The method includes: when a picture to be matched is taken, acquiring (101) first body characteristic information corresponding to the picture to be matched, determining (102) a first user identifier corresponding to the first body characteristic information according to a pre-established relationship between a user identifier and body characteristic information, and executing (103) shooting processing operation on the first user identifier.

## Description

### TECHNICAL FIELD

The present disclosure generally relates to the field of image processing, and more particularly, to an image recognition method and device for a game.

### BACKGROUND

Along with improvement in a living standard, there are more and more game modes for people, and a live experience game becomes a popular game form.

For example, in a first-person shooter game, multiple users may start the first-person shooter game in clothes for simulating a shooter game scene in a place specially for simulating the shooter game scene after being equipped with simulative guns specially for simulating the shooter game scene.

### SUMMARY

Accordingly, the present disclosure provides an image recognition method and device for a game, in accordance with claims which follow.

According to a first aspect of the embodiments of the present disclosure, an image recognition method for a game is provided, which includes:
when a picture to be matched is taken, acquiring first body characteristic information corresponding to the picture to be matched;
determining a first user identifier corresponding to the first body characteristic information according to a pre-established relationship between a user identifier and body characteristic information; and
executing shooting processing operation on the first user identifier.

According to the above method, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiments, the image recognition device is adopted to simulate a simulative gun required in the game, a manner of taking the picture by the image recognition device is adopted to simulate a shooting action, and thus multiple users may be equipped with image recognition devices respectively. As such, if a certain user is photographed, it is indicated that the user is shot. A special simulative gun is not required to be equipped in a game process, so that limits of simulative guns are broken, and flexibility is improved.

According to a particular embodiment, the method may further include:
photographing at least one game user to obtain at least one picture of the at least one game user respectively;
acquiring body characteristic information of each game user according to the at least one picture of each game user; and
establishing a relationship between the user identifier and body characteristic information of each game user.

According to a particular embodiment, the method may further include:
judging whether the number of pictures which have been locally taken is larger than a preset number or not;
when the number of the pictures which have been taken is determined to be larger than the preset number, disabling a photographing right; and
enabling the photographing right after a preset time length.

According to a particular embodiment, the step of acquiring the first body characteristic information corresponding to the picture to be matched may include:
determining a preset central area of the picture to be matched; and
performing characteristic extraction on the preset central area to obtain the first body characteristic information.

According to a particular embodiment, the relationship may further include a relationship among a user identifier, a body part and body characteristic information, and the method may further include:
determining a first body part and first user identifier corresponding to the first body characteristic information according to the relationship; and
the step of executing shooting processing operation on the first user identifier may include:
executing shooting processing operation corresponding to the first body part on the first user identifier.

According to a particular embodiment, the step of executing shooting processing operation on the first user identifier may include:
disabling a game right of the first user identifier; or,
reducing a life value of the first user identifier, and if the life value of the first user identifier is lower than a preset threshold value, disabling the game right of the first user identifier.

According to a second aspect of the embodiments of the present disclosure, an image recognition method for a game is provided, which includes:
receiving a picture to be matched which is taken by a terminal;
acquiring first body characteristic information corresponding to the picture to be matched;
determining a first user identifier corresponding to the first body characteristic information according to a pre-established relationship between a user identifier and body characteristic information; and
executing shooting processing operation on the first user identifier.

According to the above method, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiments, the image recognition device is adopted to simulate a simulative gun required in the game, a manner of taking the picture by the image recognition device is adopted to simulate a shooting action, and thus multiple users may be equipped with image recognition devices respectively. As such, if a certain user is photographed, it is indicated that the user is shot. A special simulative gun is not required to be equipped in a game process, so that limits of simulative guns are broken, and flexibility is improved.

According to a particular embodiment, the method may further include:
receiving at least one picture sent by the terminal, the at least one picture being obtained by photographing a current game user by the terminal;
acquiring body characteristic information of the current game user according to the at least one picture; and
establishing a relationship between a user identifier of the terminal and the body characteristic information.

According to a particular embodiment, the method may further include:
judging whether the number of pictures which have been taken by the terminal is larger than a preset number or not;
when the number of the pictures which have been taken by the terminal is determined to be larger than the preset number, disabling a photographing right of the terminal; and
enabling the photographing right of the terminal after a preset time length.

According to a particular embodiment, the step of acquiring the first body characteristic information corresponding to the picture to be matched may include:
determining a preset central area of the picture to be matched; and
performing characteristic extraction on the preset central area to obtain the first body characteristic information.

According to a particular embodiment, the relationship may further include a relationship among a user identifier, a body part and body characteristic information, and the method may further include:
determining a first body part and first user identifier corresponding to the first body characteristic information according to the relationship; and
the step of executing shooting processing operation on the first user identifier may include:
executing shooting processing operation corresponding to the first body part on the first user identifier.

According to a particular embodiment, the step of executing shooting processing operation on the first user identifier may include:
disabling a game right of the first user identifier; or,
reducing a life value of the first user identifier, and if the life value of the first user identifier is lower than a preset threshold value, disabling the game right of the first user identifier.

According to a third aspect of the embodiments of the present disclosure, an image recognition method for a game is provided, which includes:
when a picture to be matched is taken, acquiring first body characteristic information corresponding to the picture to be matched;
determining a first user identifier corresponding to the first body characteristic information according to a pre-established relationship between a user identifier and body characteristic information; and
sending the first user identifier to a server to enable the server to execute shooting processing operation on the first user identifier.

According to the above method, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiments, the image recognition device is adopted to simulate a simulative gun required in the game, a manner of taking the picture by the image recognition device is adopted to simulate a shooting action, and thus multiple users may be equipped with image recognition devices respectively. As such, if a certain user is photographed, it is indicated that the user is shot. A special simulative gun is not required to be equipped in a game process, so that limits of simulative guns are broken, and flexibility is improved.

According to a particular embodiment, the method may further include:
photographing at least one game user to obtain at least one picture of the at least one game user respectively;
acquiring body characteristic information of each game user according to the at least one picture of each game user; and
establishing a relationship between a user identifier and body characteristic information of each game user.

According to a particular embodiment, the method may further include:
photographing a current game user to obtain at least one picture of the current game user;
sending the at least one picture of the current game user to the server to enable the server to acquire body characteristic information of the current game user according to the at least one picture of the current game user and establish a relationship between a local user identifier and the body characteristic information; and
receiving the relationship established by the server.

According to a particular embodiment, the method may further include:
judging whether the number of pictures which have been taken is larger than a preset number or not;
when the number of the pictures which have been taken is determined to be larger than the preset number, disabling a photographing right; and
enabling the photographing right after a preset time length.

According to a particular embodiment, the step of acquiring the first body characteristic information corresponding to the picture to be matched may include:
determining a preset central area of the picture to be matched; and
performing characteristic extraction on the preset central area to obtain the first body characteristic information.

According to a particular embodiment, the relationship may further include a relationship among a user identifier, a body part and body characteristic information, and the method may further include:
determining a first body part and first user identifier corresponding to the first body characteristic information according to the relationship.

According to a particular embodiment, the method may further include:
receiving a message of disabling a game right sent from the server, the message being sent when the server disables the local game right according to the first user identifier; and
displaying the message.

According to a fourth aspect of the embodiments of the present disclosure, an image recognition device for a game is provided, which includes:
a photographing module, configured to take a picture to be matched;
a first acquisition module, configured to acquire first body characteristic information corresponding to the picture to be matched;
a determination module, configured to determine a first user identifier corresponding to the first body characteristic information according to a pre-established relationship between a user identifier and body characteristic information; and
an execution module, configured to execute shooting processing operation on the first user identifier.

The advantages and technical effects of the device according to the invention correspond to those of the method presented above.

According to a particular embodiment, the photographing module may be further configured to photograph at least one game user to obtain at least one picture of the at least one game user respectively;
the device may further include:
a second acquisition module, configured to acquire body characteristic information of each game user according to the at least one picture of each game user; and
a relationship establishment module, configured to establish a relationship between the user identifier and body characteristic information of each game user.

According to a particular embodiment, the device may further include:
a judgment module, configured to judge whether the number of pictures which have been locally taken is larger than a preset number or not; and
a photographing right processing module, configured to, when the number of the pictures which have been taken is determined to be larger than the preset number, disable a photographing right, and enable the photographing right after a preset time length.

According to a particular embodiment, the first acquisition module may further be configured to determine a preset central area of the picture to be matched, and perform characteristic extraction on the preset central area to obtain the first body characteristic information.

According to a particular embodiment, the relationship may further include a relationship among a user identifier, a body part and body characteristic information;
the determination module may be further configured to determine a first body part and first user identifier corresponding to the first body characteristic information according to the relationship; and
the execution module may be further configured to execute shooting processing operation corresponding to the first body part on the first user identifier.

According to a particular embodiment, the execution module may be further configured to disable a game right of the first user identifier; or, reduce a life value of the first user identifier, and if the life value of the first user identifier is lower than a preset threshold value, disable the game right of the first user identifier.

According to a fifth aspect of the embodiments of the present disclosure, an image recognition device for a game is provided, which includes:
a receiving module, configured to receive a picture to be matched which is taken by a terminal;
a first acquisition module, configured to acquire first body characteristic information corresponding to the picture to be matched;
a determination module, configured to determine a first user identifier corresponding to the first body characteristic information according to a pre-established relationship between a user identifier and body characteristic information; and
an execution module, configured to execute shooting processing operation on the first user identifier.

The advantages and technical effects of the device according to the invention correspond to those of the method presented above.

According to a particular embodiment, the receiving module may be further configured to receive at least one picture sent by the terminal, the at least one picture being obtained by photographing a current game user by the terminal;
the device may further include:
a second acquisition module, configured to acquire body characteristic information of the current game user according to the at least one picture; and
a relationship establishment module, configured to establish a relationship between a user identifier of the terminal and the body characteristic information.

According to a particular embodiment, the device may further include:
a judgment module, configured to judge whether the number of pictures which have been taken by the terminal is larger than a preset number or not; and
a photographing right processing module, configured to, when the number of the pictures which have been taken by the terminal is determined to be larger than the preset number, disable a photographing right of the terminal, and enable the photographing right of the terminal after a preset time length.

According to a particular embodiment, the first acquisition module may be further configured to determine a preset central area of the picture to be matched, and perform characteristic extraction on the preset central area to obtain the first body characteristic information.

According to a particular embodiment, the relationship may further include a relationship among a user identifier, a body part and body characteristic information;
the determination module may be further configured to determine a first body part and first user identifier corresponding to the first body characteristic information according to the relationship; and
the execution module may be further configured to execute shooting processing operation corresponding to the first body part on the first user identifier.

According to a particular embodiment, the execution module may be further configured to disable a game right of the first user identifier; or, reduce a life value of the first user identifier, and if the life value of the first user identifier is lower than a preset threshold value, disable the game right of the first user identifier.

According to a sixth aspect of the embodiments of the present disclosure, an image recognition device for a game is provided, which includes:
a photographing module, configured to take a picture to be matched;
a first acquisition module, configured to acquire first body characteristic information corresponding to the picture to be matched;
a determination module, configured to determine a first user identifier corresponding to the first body characteristic information according to a pre-established relationship between a user identifier and body characteristic information; and
a sending module, configured to send the first user identifier to a server to enable the server to execute shooting processing operation on the first user identifier.

The advantages and technical effects of the device according to the invention correspond to those of the method presented above.

According to a particular embodiment, the photographing module may be further configured to photograph at least one game user to obtain at least one picture of the at least one game user respectively;
the device may further include:
a second acquisition module, configured to acquire body characteristic information of each game user according to the at least one picture of each game user; and
a relationship establishment module, configured to establish a relationship between a user identifier and body characteristic information of each game user.

According to a particular embodiment, the photographing module may be further configured to photograph a current game user to obtain at least one picture of the current game user;
the sending module may be further configured to send the at least one picture of the current game user to the server to enable the server to acquire body characteristic information of the current game user according to the at least one picture of the current game user and establish a relationship between a local user identifier and the body characteristic information;
the device may further include:
a receiving module, configured to receive the relationship established by the server.

According to a particular embodiment, the device may further include:
a judgment module, configured to judge whether the number of pictures which have been taken is larger than a preset number or not; and
a photographing right processing module, configured to, when the number of the pictures which have been taken is determined to be larger than the preset number, disable a photographing right, and enable the photographing right after a preset time length.

According to a particular embodiment, the first acquisition module may be further configured to determine a preset central area of the picture to be matched, and perform characteristic extraction on the preset central area to obtain the first body characteristic information.

According to a particular embodiment, the relationship may further include a relationship among a user identifier, a body part and body characteristic information; and
the determination module may be further configured to determine a first body part and first user identifier corresponding to the first body characteristic information according to the relationship.

According to a particular embodiment, the device may further include:
a receiving module, configured to receive a message of disabling a game right sent from the server, the message being sent when the server disables the local game right according to the first user identifier; and
a display module, configured to display the message.

According to a seventh aspect of the embodiments of the present disclosure, an image recognition device for a game is provided, which includes:
a processor; and
a memory configured to store instructions executable by the processor,
wherein the processor may be configured to:
when a picture to be matched is taken, acquire first body characteristic information corresponding to the picture to be matched;
determine a first user identifier corresponding to the first body characteristic information according to a pre-established relationship between a user identifier and body characteristic information; and
execute shooting processing operation on the first user identifier.

According to an eighth aspect of the embodiments of the present disclosure, an image recognition device for a game is provided, which includes:
a processor; and
a memory configured to store instructions executable by the processor,
wherein the processor may be configured to:
receive a picture to be matched which is taken by a terminal;
acquire first body characteristic information corresponding to the picture to be matched;
determine a first user identifier corresponding to the first body characteristic information according to a pre-established relationship between a user identifier and body characteristic information; and
execute shooting processing operation on the first user identifier.

According to a ninth aspect of the embodiments of the present disclosure, an image recognition device for a game is provided, which includes:
a processor; and
a memory configured to store instructions executable by the processor,
wherein the processor may be configured to:
when a picture to be matched is taken, acquire first body characteristic information corresponding to the picture to be matched;
determine a first user identifier corresponding to the first body characteristic information according to a pre-established relationship between a user identifier and body characteristic information; and
send the first user identifier to a server to enable the server to execute shooting processing operation on the first user identifier.

In one particular embodiment, the steps of the image recognition method for a game are determined by computer program instructions.

Consequently, according to a tenth aspect, the invention is also directed to a computer program for executing the steps of the image recognition method for a game as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the above general description and the following detailed description are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing an image recognition method for a game, according to an exemplary embodiment.
Fig. 2 is a flow chart showing an image recognition method for a game, according to another exemplary embodiment.
Fig. 3 is a structure diagram illustrating an image recognition system for a game, according to an exemplary embodiment.
Fig. 4 is a flow chart showing an image recognition method for a game, according to another exemplary embodiment.
Fig. 5 is a flow chart showing an image recognition method for a game, according to another exemplary embodiment.
Fig. 6 is a flow chart showing an image recognition method for a game, according to another exemplary embodiment.
Fig. 7 is a block diagram illustrating an image recognition device for a game, according to an exemplary embodiment.
Fig. 8 is a block diagram illustrating an image recognition device for a game, according to another exemplary embodiment.
Fig. 9 is a block diagram illustrating an image recognition device for a game, according to another exemplary embodiment.
Fig. 10 is a block diagram illustrating an image recognition device for a game, according to another exemplary embodiment.
Fig. 11 is a block diagram illustrating an image recognition device for a game, according to another exemplary embodiment.
Fig. 12 is a block diagram illustrating an image recognition device for a game, according to another exemplary embodiment.
Fig. 13 is a block diagram illustrating an image recognition device for a game, according to another exemplary embodiment.
Fig. 14 is a block diagram illustrating an image recognition device for a game, according to another exemplary embodiment.
Fig. 15 is a block diagram illustrating an image recognition device for a game, according to another exemplary embodiment.
Fig. 16 is a block diagram illustrating an image recognition device for a game, according to another exemplary embodiment.
Fig. 17 is a block diagram illustrating an image recognition device for a game, according to another exemplary embodiment.
Fig. 18 is a block diagram illustrating an image recognition device for a game, according to another exemplary embodiment.
Fig. 19 is a block diagram illustrating an image recognition device for a game, according to another exemplary embodiment.

### DETAILED DESCRIPTION

In order to make a purpose, technical solutions and advantages of the present disclosure clearer, implementation modes of the present disclosure will be further described below with reference to the accompanying drawings in detail.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

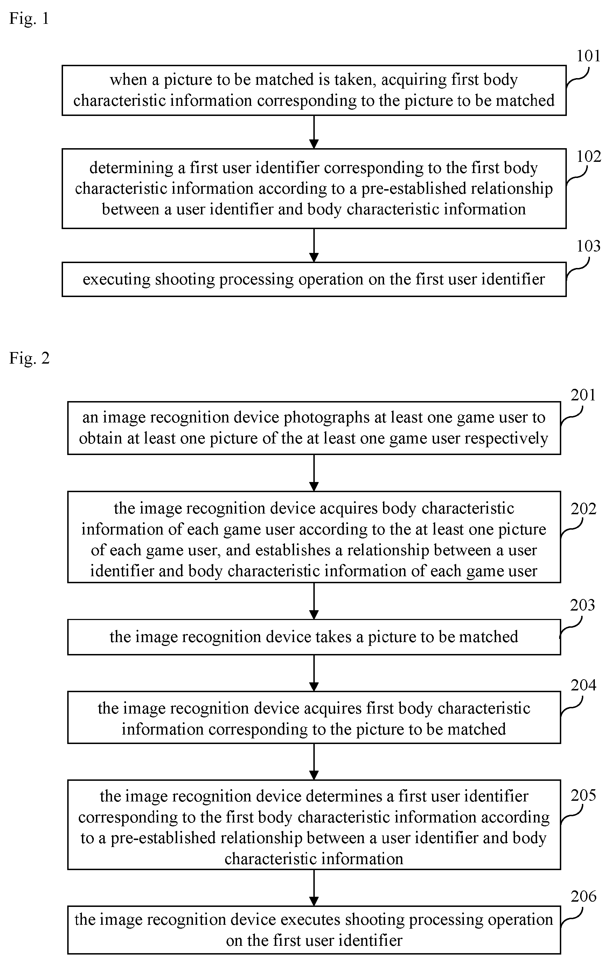

Fig. 1 is a flow chart showing an image recognition method for a game, according to an exemplary embodiment. As shown in Fig. 1, the image recognition method for the game is applied to an image recognition device, and includes the following steps.
Step 101: when a picture to be matched is taken, acquiring first body characteristic information corresponding to the picture to be matched;
Step 102: determining a first user identifier corresponding to the first body characteristic information according to a pre-established relationship between a user identifier and body characteristic information; and
Step 103: executing shooting processing operation on the first user identifier.

From the above, according to the method provided by the embodiment, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiment, the image recognition device is adopted to simulate a simulative gun required in the game, a manner of taking the picture by the image recognition device is adopted to simulate a shooting action, and thus multiple users may be equipped with image recognition devices respectively. As such, if a certain user is photographed, it is indicated that the user is shot. A special simulative gun is not required to be equipped in a game process, so that limits of simulative guns are broken, and flexibility is improved.

In another embodiment, the method further includes:
photographing at least one game user to obtain at least one picture of the at least one game user respectively;
acquiring body characteristic information of each game user according to the at least one picture of each game user; and
establishing a relationship between the user identifier and body characteristic information of each game user.

In another embodiment, the method further includes:
judging whether the number of pictures which have been taken by a terminal is larger than a preset number or not;
when the number of the pictures which have been taken by the terminal is determined to be larger than the preset number, disabling a photographing right of the terminal; and
enabling the photographing right of the terminal after a preset time length.

In another embodiment, acquiring the first body characteristic information corresponding to the picture to be matched includes:
determining a preset central area of the picture to be matched; and
performing characteristic extraction on the preset central area to obtain the first body characteristic information.

In another embodiment, the relationship further includes a relationship among a user identifier, a body part and body characteristic information, and the method further includes:
determining a first body part and first user identifier corresponding to the first body characteristic information according to the relationship; and
executing shooting processing operation on the first user identifier includes:
executing shooting processing operation corresponding to the first body part on the first user identifier.

In another embodiment, executing shooting processing operation on the first user identifier includes:
disabling a game right of the first user identifier; or,
reducing a life value of the first user identifier, and if the life value of the first user identifier is lower than a preset threshold value, disabling the game right of the first user identifier.

Fig. 2 is a flow chart showing an image recognition method for a game, according to an exemplary embodiment. As shown in Fig. 2, the image recognition method for the game is applied to an image recognition device, and includes the following steps.

Step 201: the image recognition device respectively photographs at least one game user to obtain at least one picture of the at least one game user.

In the embodiment, in order to break limits of simulative guns, each game user may be equipped with an image recognition device to replace a simulative gun with the image recognition device in a first-person shooter game process, and a certain game user is photographed by the image recognition device to obtain a picture to simulate an action of shooting the game user.

Herein, the image recognition device may take pictures and process the pictures, and also may display the taken pictures and the processed pictures. The image recognition device may be equipment such as a terminal and a server, which is not limited in the embodiment.

In order to facilitate recognizing a game user photographed in a game process, the image recognition device may photograph at least one game user to obtain at least one picture of the at least one game user respectively so as to extract body characteristic information of each game user from the at least one picture before the game is started.

In the embodiment, during photographing, the image recognition device is adopted to photograph game users intended to participate in the game to take at least one picture of each game user, and the taken pictures include at least one picture of each game user.

In another example provided by the embodiment, each image recognition device in multiple image recognition devices may be adopted for respective photographing, that is, each game user may be photographed by own image recognition device, and each image recognition device may take at least one picture of the corresponding game user. Moreover, the multiple image recognition devices may interact with one another, and each image recognition device may send the locally taken pictures to the other image recognition devices.

Step 202: the image recognition device acquires body characteristic information of each game user according to the at least one picture of each game user, and establishes a relationship between a user identifier and body characteristic information of each game user.

The image recognition device may process the acquired pictures to obtain the body characteristic information of each game user on the basis of a characteristic extraction algorithm after acquiring the at least one picture of each game user. The body characteristic information is configured to determine the unique game user, and different game users have different body characteristic information.

Herein, the characteristic extraction algorithm may be a color-histogram-based characteristic extraction algorithm, a Hough transform algorithm, a template-matching-based characteristic extraction algorithm and the like, which is not limited in the embodiment. Correspondingly, the body characteristic information obtained by processing based on the characteristic extraction algorithm may be color characteristic information, posture characteristic information, face characteristic information of the pictures, which is not limited in the embodiment.

By photographing the game users and performing characteristic extraction on the obtained pictures, the body characteristic information of the game users may be acquired according to a face characteristic, iris characteristic, body posture, garment color and the like of each game user.

In order to conveniently distinguish the game users in the game process, the image recognition device may acquire a current login user identifier of the image recognition device of each game user after the body characteristic information of each game user is acquired, establish the relationship between the user identifier and body characteristic information of each game user and determine the game user with specified body characteristic information according to the relationship. Herein, the user identifier may be a user account for login of the game user, an equipment number of the image recognition device, the name of the game user or the like, which is not limited in the embodiment.

In addition, in order to conveniently recognize a photographed body part of the game user in the game process, the image recognition device may perform photographing for each body part of each game user to obtain pictures, including each body part, of the corresponding game user during photographing, perform characteristic extraction on the pictures including each body part to obtain body characteristic information of each body part and establish a relationship among a user identifier, body part and body characteristic information of each game user.

Herein, the image recognition device may prompt the game user with a body part to be currently photographed, the game user is photographed according to the prompt, and the image recognition device may photograph each body part, thereby acquiring the body characteristic information of each body part. The body part in the embodiment may include the head, the arms, the trunk, the lower limbs and the like, which is not limited in the embodiment.

Step 203: the image recognition device takes a picture to be matched.

After the relationship is established, multiple game users may start the game, and in the game process, each game user may hold the image recognition device with a hand to photograph a target game user to obtain a picture to be matched, and the photographed game user, i.e. the shot game user, may subsequently be determined according to the picture to be matched and the relationship.

In addition, in order to simulate shooting actions in the first-person shooter game and improve reality, the image recognition device may play shooting sounds during photographing every time.

In the first-person shooter game, when ammunitions of the simulative guns used by the game users are exhausted, the game users are required to supplement ammunitions to continue shooting, and may not unlimitedly shoot. Then, in order to simulate a scene where ammunitions are exhausted in the embodiment, a photographing right, i.e. a right of shooting the other game users, may be allocated to each image recognition device in the game process, and the photographing right is controlled according to the number of pictures which have been taken.

In a photographing process, the image recognition device may record the current number of the pictures which have been taken and update the recorded number of the pictures which have been taken according to detected photographing operation. Then, every time when the image recognition device takes a picture to be matched, the current number of the pictures which have been taken may be acquired at first, the number of the pictures which have been taken is judged whether to be larger than a preset number or not, and when the number of the pictures which have been taken is determined to be larger than the preset number, it is indicated that the pictures taken by the image recognition device have exceeded a limit, the shooting right of the image recognition device is disabled, a picture which is currently taken is ignored, and the photographing right of the image recognition device is enabled again after a preset time length. That is, the timing is recorded when the photographing right of the image recognition device is disabled, and the photographing right of the image recognition device is enabled again when the recorded time length reaches the preset time length.

In a subsequent process, the current number of the pictures which have been taken is reset to be 0 after the photographing right of the image recognition device is enabled, the current reset number of pictures which have been taken is recorded, and then the game user may continue photographing the other game users with the image recognition device.

Herein, the preset number may be determined by the image recognition device according to a preset game rule, or may be determined by negotiation of the multiple game users. The preset time length may be determined by the image recognition device according to the preset game rule, or may be determined according to a time length consumed by ammunition supplementation in the first-person shooter game, and there are no limits made in the embodiment.

In addition, in order to improve flexibility, the image recognition device may provide a resetting option when the photographing right is in an on state. The resetting option is configured to disable the photographing right and set the number of the pictures which have been taken to be 0. Thus, the game user may initiatively click the resetting option at the right time. The photographing right of the image recognition device may be disabled no matter how many pictures have been taken at present when the image recognition device detects clicking operation over the resetting option, and after the preset time length, the photographing right is enabled, and the current number of the pictures which have been taken by the image recognition device is set to be 0.

For example, the preset number is 12, the preset time length is 3 seconds. When the number of the pictures which have been taken is 11 or the game user is in a safer state and is not required to shoot the other game users, the game user may initiatively click the resetting option and the photographing right of the image recognition device is disabled. After 3 seconds, the photographing right is enabled again, and meanwhile, the number of the pictures which have been taken is reset to be 0.

Step 204: the image recognition device acquires first body characteristic information corresponding to the picture to be matched.

The image recognition device may acquire the body characteristic information corresponding to the picture to be matched as first body characteristic information after taking the picture to be matched, thereby determining the photographed game user according to the first body characteristic information and the established relationship. Herein, a process of acquiring the body characteristic information corresponding to the picture to be matched is similar to a process of acquiring the body characteristic information of each game user according to the at least one picture of each game user in Step 202, and will not be repeated here.

In addition, in order to improve photographing accuracy, the photographed game user may also be determined only according to body characteristic information in a preset central area of the picture to be matched. That is, the image recognition device may determine the preset central area of the picture to be matched and perform characteristic extraction on the preset central area to obtain the first body characteristic information, and does not perform characteristic extraction on other areas except the preset central area in the picture to be matched.

Herein, the preset central area may be a circular area determined by taking the center of the picture to be matched as the circle center and taking a preset distance as a radius, and may also be a square area determined according to the center of the picture to be matched and the preset distance, which is not limited in the embodiment.

Correspondingly, the game user is required to aim at the target game user with the image recognition device when photographing the target game user during a practical application, and photographs the target game user only when the target game user is located in the preset central area of a picture displayed by the image recognition device to ensure that an image of the target game user falls in the preset central area. In order to facilitate photographing by the game user, the image recognition device may display a prompting identifier in the preset central area to prompt the game user to align the prompting identifier with the target game user to ensure that the target game user is at a position where the prompting identifier is located when displaying the taken picture. Herein, the prompting identifier may be a red point identifier, a crossed identifier or four arrows pointing to the center of the picture to be matched in upward, downward, leftward and rightward directions, which is not limited in the embodiment.

Step 205: the image recognition device determines a first user identifier corresponding to the first body characteristic information according to the pre-established relationship between the user identifier and the body characteristic information.

The image recognition device judges whether the body characteristic information in the relationship is matched with the first body characteristic information or not after acquiring the first body characteristic information, and determines the user identifier corresponding to the body characteristic information matched with the first body characteristic information as the first user identifier according to the relationship when any piece of body characteristic information in the relationship is matched with the first body characteristic information, and the game user indicated by the first user identifier is the photographed game user, i.e. the shot game user. At this time, the image recognition device may display a shooting success prompting message to prompt a photographing success, and may also display the first user identifier to prompt the game user with the shot game user.

In addition, when every piece of body characteristic information in the relationship is determined not to be matched with the first body characteristic information, the game user corresponding to the image recognition device is determined not to photograph any game user, and then the picture to be matched and the first body characteristic information may be deleted to reduce an occupied storage space. At this time, the image recognition device may also display a shooting failure prompting message to prompt the corresponding game user with a shooting failure.

Step 206: the image recognition device executes shooting processing operation on the first user identifier.

Herein, shooting processing operation represents that any shot game user shall be subjected to "punishment" operation, and may be determined according to the preset game rule. The image recognition device may execute shooting processing operation on the first user identifier when determining the first user identifier.

For example, shooting processing operation may include operation of disabling a game right of the first user identifier, that is, the game right of the first user identifier may be disabled to set the first user identifier into a state of quitting the game after the image recognition device determines the first user identifier, and at this time, the game user indicated by the first user identifier is disabled to perform photographing operation.

Alternatively, shooting processing operation may include operation of reducing a life value, that is, the image recognition device may maintain a life value of each user identifier, reduces the life value of the first user identifier when the first user identifier which is shot is determined, and disables the game right of the first user identifier when determining that the life value of the first user identifier is lower than a preset threshold value in a subsequent process. Moreover, the image recognition device may reduce the life value of the first user identifier according to a preset difference.

Herein, the life value may be a numerical value within a preset range. The preset range may be determined according to the game rule. The preset threshold value may be a minimum value within the preset range. The preset threshold value may, for example, be 1 or another integer. The preset difference may also be determined according to the game rule. There are no limits made in the embodiment.

In addition, when the pre-established relationship includes a relationship among the user identifier, the body part and the body characteristic information. The image recognition device may execute shooting processing operation corresponding to the body part on the first user identifier according to the body part corresponding to the first body characteristic information of the picture to be matched.

That is, the image recognition device may determine shooting processing operation corresponding to each body part in advance, and shooting processing operation corresponding to different body parts may be the same, and may also be different. When determining that any piece of body characteristic information in the relationship is matched with the first body characteristic information, the image recognition device determines the user identifier and body part corresponding to the body characteristic information matched with the first body characteristic information as the first user identifier and the first body part respectively, so as to determine shooting processing operation corresponding to the first body part, and executes the determined shooting processing operation on the first user identifier.

For example, the image recognition device determines a life value difference corresponding to each body part, and reduces the life value of the first user identifier according to the life value difference corresponding to the first body part when determining the first user identifier and the first body part. Herein, the life value differences corresponding to different body parts may be the same or different, the life value difference corresponding to each body part may also be determined according to importance of the body part. The corresponding life value differences are greater if the body parts are more important, and the corresponding life value differences are smaller if the body parts are more unimportant.

For example, the preset threshold value is 1, a life value difference of the head is 100, a life value difference of the trunk is 20, a life value difference of the arms is 10 and a life value difference of the lower limbs is 5. An initial life value of the game user is 100 at the beginning of the game. If the head of the game user is photographed, the life value is reduced based on the life value difference 100 of the head and thus the remaining life value is 0. The game right of the game user is directly disabled. If the trunk of the game user is photographed, the life value is reduced based on the life value difference 20 of the trunk and thus the remaining life value is 80. When the life value is reduced to be 0 after the game user is subsequently photographed for many times, the game right of the game user is disabled.

It is noted that the game user may play the game for many rounds but a validity duration of the game right is only one round. That is, after the game right of a certain game user is disabled, the game user may not play the game in this round, but the game right of the game user may be enabled again at the beginning of the next round of the game after this round of the game ends, and at this time, the game user may rejoin the game.

In addition, a user identifier for login of the image recognition device which takes the picture to be matched is employed as a second user identifier, and then shooting completion operation may also be executed on the second user identifier when shooting processing operation is executed on the first user identifier. The shooting completion operation represents that any game user shooting another game user shall be subjected to "rewarding" operation, and may be determined according to the preset game rule, which is not limited in the embodiment.

For example, the shooting completion operation may include operation of increasing the life value, that is, the image recognition device increases the life value of the second user identifier after determining the second user identifier shooting the other game user. Moreover, the image recognition device may also increase the life value of the second user identifier according to the preset difference.

In addition, when the pre-established relationship includes the relationship among the user identifier, the body part and the body characteristic information, the image recognition device may also execute the shooting completion operation corresponding to the body part on the second user identifier according to the body part corresponding to the first body characteristic information of the picture to be matched.

That is, the image recognition device may determine shooting completion operation corresponding to each body part in advance, and shooting completion operation corresponding to different body parts may be the same, and may also be different. After determining the first body part which is shot, the image recognition device may determine the shooting completion operation corresponding to the first body part and execute the determined shooting completion operation on the second user identifier. For example, the image recognition device increases the life value of the second user identifier according to the life value difference corresponding to the first body part.

In addition, in the game process of the embodiment, an initial score may be allocated to each user identifier, and the score of each user identifier may be updated according to game data such as shooting times, hitting times and shot times of the user identifier. Correspondingly, the image recognition device may reduce the score of the first user identifier when determining the shot first user identifier, and may increase the score of the second user identifier when determining the second user identifier shooting the other game user. At the end of the current round of the game, a final score of each user identifier, i.e. a final score of each game user may be determined.

In the embodiment, the image recognition device is adopted for the shooting game. For example, in a game process in which user A and user B involve, each of user A and user B is equipped with an image recognition device, and performs photographing with the image recognition device before the game is started, and the image recognition devices store body characteristic information of each user. After the game is started, user A photographs user B to obtain a picture to be matched, the image recognition device determines that user B is shot, disables a game right of user B or reduces a life value of user B according to different photographed body parts of user B, and increases a score of user A.

From the above, according to the method provided by the embodiment, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiment, the image recognition device is adopted to simulate a simulative gun required in the game and a manner of taking the picture by the image recognition device is adopted to simulate a shooting action. Thus, multiple users may be equipped with image recognition devices respectively, and if a certain user is photographed, it is indicated that the user is shot. A special simulative gun is not required to be equipped in the game, so that limits of simulative guns are broken, and flexibility is improved.

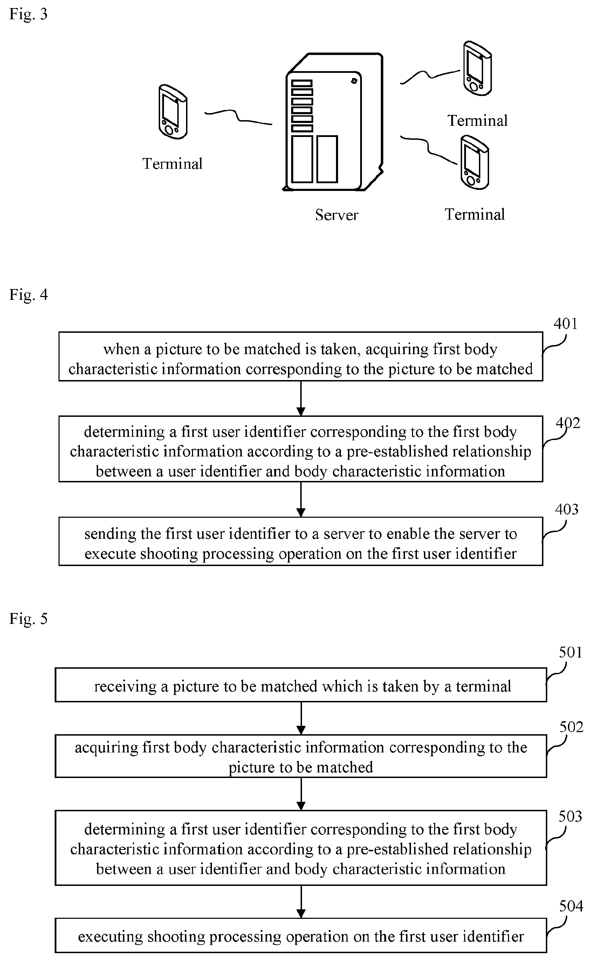

Fig. 3 is a structure diagram illustrating an image recognition system for a game, according to an exemplary embodiment. Referring to Fig. 3, the image recognition system for the game includes a server and multiple terminals, wherein the server is connected with the multiple terminals through a network.

Each terminal is configured to take a picture to be matched and send the picture to be matched which is taken by the terminal to the server. The server is configured to acquire first body characteristic information corresponding to the picture to be matched, determine a first user identifier corresponding to the first body characteristic information according to a pre-established relationship between a user identifier and body characteristic information, and execute shooting processing operation on the first user identifier.

Alternatively, each terminal is configured to take the picture to be matched, acquire the first body characteristic information corresponding to the picture to be matched, determine the first user identifier corresponding to the first body characteristic information according to the pre-established relationship between the user identifier and the body characteristic information, and send the first user identifier to the server. The server is configured to execute shooting processing operation on the first user identifier.

Alternatively, each terminal is configured to take the picture to be matched, acquire the first body characteristic information corresponding to the picture to be matched and send the first body characteristic information to the server. The server is configured to determine the first user identifier corresponding to the first body characteristic information according to the pre-established relationship between the user identifier and the body characteristic information, and execute shooting processing operation on the first user identifier.

Alternatively, each terminal is configured to take the picture to be matched and send the picture to be matched to the server. The server is configured to acquire the first body characteristic information corresponding to the picture to be matched and send the first body characteristic information to the terminal which takes the picture to be matched. The terminal is further configured to determine the first user identifier corresponding to the first body characteristic information according to the pre-established relationship between the user identifier and the body characteristic information, and send the first user identifier to the server. The server is further configured to execute shooting processing operation on the first user identifier.

Fig. 4 is a flow chart showing an image recognition method for a game, according to another exemplary embodiment. As shown in Fig. 4, the image recognition method for the game is applied to a terminal, and includes the following steps:
Step 401: when a picture to be matched is taken, acquiring first body characteristic information corresponding to the picture to be matched;
Step 402: determining a first user identifier corresponding to the first body characteristic information according to a pre-established relationship between a user identifier and body characteristic information; and
Step 403: sending the first user identifier to a server to enable the server to execute shooting processing operation on the first user identifier.

From the above, according to the method provided by the embodiment, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiment, the terminal is adopted to simulate a simulative gun required in the game and a manner of taking the picture by the terminal is adopted to simulate a shooting action. Thus, multiple users may be equipped with terminals respectively, and if a certain user is photographed, it is indicated that the user is shot. A special simulative gun is not required to be equipped in the game, so that limits of simulative guns are broken, and flexibility is improved.

In another embodiment, the method further includes:
photographing at least one game user to obtain at least one picture of the at least one game user respectively;
acquiring body characteristic information of each game user according to the at least one picture of each game user; and
establishing a relationship between a user identifier and body characteristic information of each game user.

In another embodiment, the method further includes:
photographing a current game user to obtain at least one picture of the current game user;
sending the at least one picture of the current game user to the server to enable the server to acquire body characteristic information of the current game user according to the at least one picture of the current game user and establish a relationship between a local user identifier and the body characteristic information; and
receiving the relationship established by the server.

In another embodiment, the method further includes:
judging whether the number of pictures which have been taken is larger than a preset number or not;
when the number of the pictures which have been taken is determined to be larger than the preset number, disabling a photographing right; and
enabling the photographing right after a preset time length.

In another embodiment, acquiring the first body characteristic information corresponding to the picture to be matched includes:
determining a preset central area of the picture to be matched; and
performing characteristic extraction on the preset central area to obtain the first body characteristic information.

In another embodiment, the relationship further includes a relationship among a user identifier, a body part and body characteristic information, and the method further includes:
determining a first body part and a first user identifier corresponding to the first body characteristic information according to the relationship.

In another embodiment, the method further includes:
receiving a message of disabling a game right from the server, the message being sent when the server disables the game right according to the first user identifier; and
displaying the message.

Fig. 5 is a flow chart showing an image recognition method for a game, according to another exemplary embodiment. As shown in Fig. 5, the image recognition method for the game is applied to a server, and includes the following steps:
Step 501: receiving a picture to be matched which is taken by a terminal;
Step 502: acquiring first body characteristic information corresponding to the picture to be matched;
Step 503: determining a first user identifier corresponding to the first body characteristic information according to a pre-established relationship between a user identifier and body characteristic information; and
Step 504: executing shooting processing operation on the first user identifier.

From the above, according to the method provided by the embodiment, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiment, a shooting action is simulated by acquiring the picture taken by the terminal. Thus, multiple users may upload the pictures taken by the terminals to the server respectively, and the server performs image processing on the acquired pictures to indicate that a certain photographed user is shot when being photographed. A special simulative gun is not required to be equipped in a game, so that limits of simulative guns are broken, and flexibility is improved.

In another embodiment, the method further includes:
receiving at least one picture sent by the terminal, the at least one picture being obtained by photographing a current game user by the terminal;
acquiring body characteristic information of the current game user according to the at least one picture; and
establishing a relationship between a user identifier of the terminal and the body characteristic information.

In another embodiment, the method further includes:
judging whether the number of pictures which have been taken by the terminal is larger than a preset number or not;
when the number of the pictures which have been taken by the terminal is determined to be larger than the preset number, disabling a photographing right of the terminal; and
enabling the photographing right of the terminal after a preset time length.

In another embodiment, acquiring the first body characteristic information corresponding to the picture to be matched includes:
determining a preset central area of the picture to be matched; and
performing characteristic extraction on the preset central area to obtain the first body characteristic information.

In another embodiment, the relationship further includes a relationship among a user identifier, a body part and body characteristic information, and the method further includes:
determining a first body part and a first user identifier corresponding to the first body characteristic information according to the relationship; and
executing shooting processing operation on the first user identifier includes:
executing shooting processing operation corresponding to the first body part on the first user identifier.

In another embodiment, executing shooting processing operation on the first user identifier includes:
disabling a game right of the first user identifier; or,
reducing a life value of the first user identifier, and if the life value of the first user identifier is lower than a preset threshold value, disabling the game right of the first user identifier.

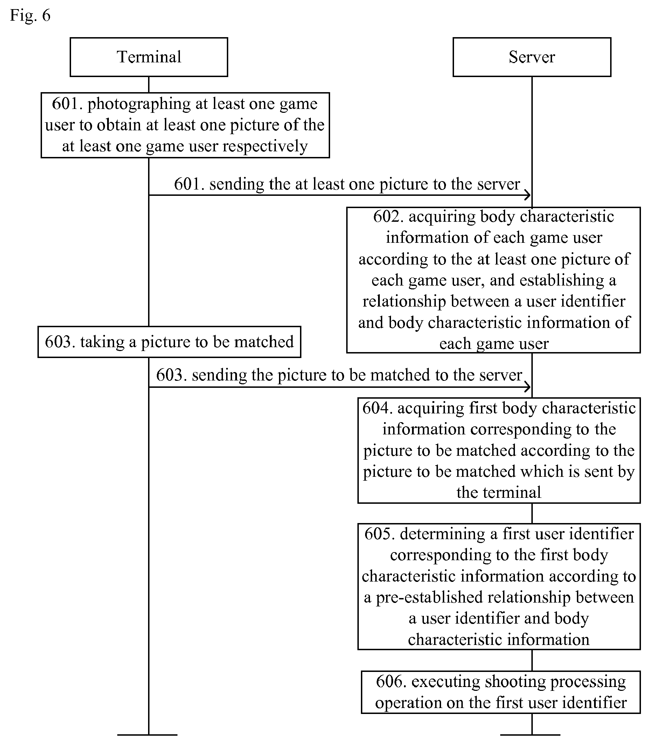

Fig. 6 is a flow chart showing an image recognition method for a game, according to another exemplary embodiment. As shown in Fig. 6, the image recognition method for the game is applied to a server and a terminal, and includes the following steps.
Step 601: the terminal photographs at least one game user to obtain at least one picture of the at least one game user respectively, and sends the at least one picture to the server.
   Step 601 is similar to operation of photographing with the image recognition device in Step 201, and will not be repeated here.
Step 602: the server acquires body characteristic information of each game user according to the at least one picture of each game user, and establishes a relationship between a user identifier and body characteristic information of each game user.
   Step 602 is similar to operation of acquiring the body characteristic information by the image recognition device in Step 202, and will not be repeated here.
Step 603: the terminal takes a picture to be matched, and sends the picture to be matched to the server.
Step 604: the server acquires first body characteristic information corresponding to the picture to be matched according to the picture to be matched which is sent by the terminal.
Step 605: the server determines a first user identifier corresponding to the first body characteristic information according to a pre-established relationship between a user identifier and body characteristic information.
Step 606: the server executes shooting processing operation on the first user identifier.

Step 604 to Step 606 are similar to operations of acquiring the first body characteristic information by the image recognition device in Step 204 to Step 206, and will not be repeated here.

In addition, after executing the shooting processing operation, the server may send a prompting message to the terminal which takes the picture to be matched and the prompting message is displayed by the terminal which takes the picture to be matched to prompt that shooting processing operation over a shot game user has been completed to a current game user. Alternatively, the server may also send the prompting message to the terminal corresponding to the first user identifier, and then the terminal corresponding to the first user identifier displays the prompting message to prompt that the shooting processing operation over the shot game user has been completed.

For example, the server sends a game right disabling message to the terminal corresponding to the first user identifier when disabling a game right of the first user identifier, and the terminal corresponding to the first user identifier displays the message to prompt that the current round of the game ends for the game users.

In the embodiment, the terminal and the server are adopted for the shooter game. For example, there are multiple game users, and a terminal of each game user logs in the server. Before the game starts, each game user takes own picture to obtain own image data such as clothes and body postures at any angle with own terminal, and uploads the taken pictures to the server on the basis of a login user identifier. The server performs characteristic extraction on the pictures uploaded by each terminal to obtain body characteristic information of each game user, and establishes the relationship between the user identifier and the body characteristic information. After the game starts, the game users photograph target game users with the terminals, and upload the obtained pictures to be matched to the server. The server performs characteristic extraction on the pictures to be matched to obtain the first body characteristic information, and compares the first body characteristic information with the body characteristic information of each game user, thereby determining which game user is shot.

From the above, according to the method provided by the embodiment, the relationship between the user identifier and the body characteristic information is pre-established, and during the game, the server may acquire the first body characteristic information corresponding to the picture to be matched by receiving the picture to be matched, determine the first user identifier corresponding to the first body characteristic information according to the relationship and execute shooting processing operation on the first user identifier. According to the embodiment, the terminal is adopted to simulate a simulative gun required in the game, and a manner of taking the picture by the terminal is adopted to simulate a shooting action. Thus, multiple users may be equipped with terminals respectively, and after the pictures taken by the terminals are uploaded to the server, the server performs image processing to indicate that a certain user photographed by the terminal is shot. A special simulative gun is not required to be equipped in a game process, so that limits of simulative guns are broken, and flexibility is improved.

The embodiment is described with respect to the condition that Step 601 and Step 603 are executed by the terminal and Step 602, Step 604 and Step 605 are executed by the server as an example. In addition, according to different parties for executing each step, the method may further include the following three conditions.
1. Each terminal executes Step 601-603 to send the established relationship to the server. The server executes Step 604 according to the relationship to acquire the first body characteristic information corresponding to the picture to be matched which is sent by any terminal and send the first body characteristic information to the terminal. The terminal executes Step 605 according to the first body characteristic information to send the first user identifier corresponding to the first body characteristic information to the server, and then the server executes Step 606 according to the first user identifier to execute shooting processing operation on the first user identifier.
   Before the game starts, the terminal of each game user may perform characteristic extraction on the pictures are taken to obtain the body characteristic information of the corresponding game user, establish the relationship between the login user identifier and the body characteristic information and upload the relationship to the server. The server summarizes the relationship uploaded by each terminal to obtain the relationship including the user identifiers and body characteristic information of all the game users, and sends the relationship to each terminal. Each terminal stores the relationship. After the game starts, each game user photographs the target game user with the terminal, and uploads the obtained picture to be matched to the server. The server performs characteristic extraction on the picture to be matched to obtain the first body characteristic information, and sends the first body characteristic information to the terminal. The terminal compares the first body characteristic information with the stored body characteristic information to acquire the first user identifier corresponding to the body characteristic information matched with the first body characteristic information, and sends the first user identifier to the server. The server determines which game user is shot according to the first user identifiers.
2. Each terminal executes Step 601 to send the taken pictures to the server. The server executes Step 602 to establish the relationship between the user identifier and body characteristic information of each game user and send the relationship to each terminal. Each terminal stores the relationship. Then, any terminal executes Step 603 to 605 to acquire the first user identifier corresponding to the picture to be matched according to the stored relationship and send the first user identifier to the server. The server executes Step 606 according to the first user identifier to execute shooting processing operation on the first user identifier.
   Before the game starts, the terminal of each game user may perform characteristic extraction on the pictures which are taken to obtain the body characteristic information of the corresponding game user and establish the relationship between the login user identifier and the body characteristic information, and upload the relationship to the server. The server summarizes the relationship uploaded by each terminal to obtain the relationship including the user identifiers and body characteristic information of all the game users, and sends the relationship to each terminal. Each terminal stores the relationship. After the game starts, each game user photographs the target game user with the terminal. The terminal performs characteristic extraction on the picture to be matched to obtain the first body characteristic information, compares the first body characteristic information with the stored body characteristic information to acquire the first user identifier corresponding to the body characteristic information matched with the first body characteristic information, and sends the first user identifier to the server. The server determines which game user is shot.
3. Each terminal executes Step 601 to send the pictures are taken to the server. The server executes Step 602 to establish the relationship between the user identifier and body characteristic information of each game user. Then, any terminal executes Step 603-604 to acquire the first body characteristic information corresponding to the picture to be matched and send the first body characteristic information to the server. The server executes Step 605-606 to determine the first user identifier corresponding to the first body characteristic information and execute shooting processing operation on the first user identifier.

Before the game starts, the terminal of each game user may perform characteristic extraction on the pictures which are taken to obtain the body characteristic information of the corresponding game user and establish the relationship between the login user identifier and the body characteristic information, and upload the relationship to the server. After the game starts, each game user photographs the target game user with the terminal, and the terminal performs characteristic extraction on the picture to be matched to obtain the first body characteristic information, and sends the first body characteristic information to the server. The server compares the first body characteristic information and the body characteristic information of each game user to acquire the first user identifier corresponding to the body characteristic information matched with the first body characteristic information, and determines which game user is shot according to the first user identifier.

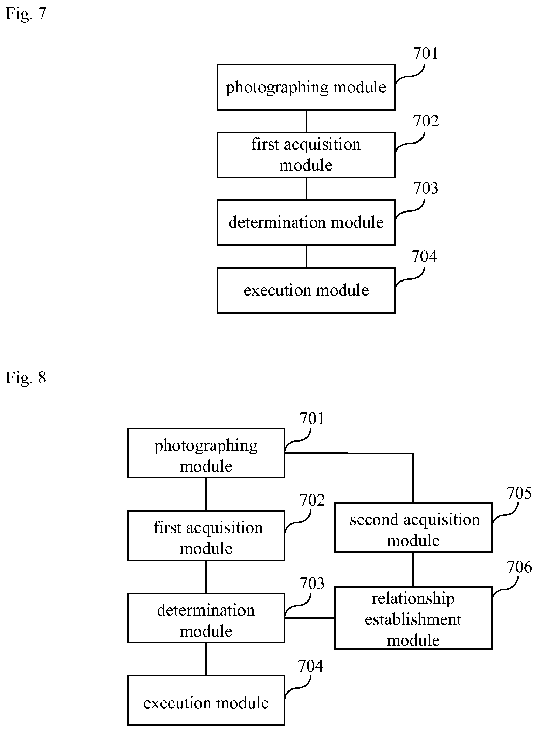

Fig. 7 is a block diagram of an image recognition device for a game, according to an exemplary embodiment. The image recognition device for the game may be applied to an image recognition device. As shown in Fig. 7, the image recognition device for the game includes: a photographing module 701, a first acquisition module 702, a determination module 703 and an execution module 704.

The photographing module 701 is configured to take a picture to be matched.

The first acquisition module 702 is configured to acquire first body characteristic information corresponding to the picture to be matched.

The determination module 703 is configured to determine a first user identifier corresponding to the first body characteristic information according to a pre-established relationship between a user identifier and body characteristic information.

The execution module 704 is configured to execute shooting processing operation on the first user identifier.

From the above, according to the device provided by the embodiment, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiment, the image recognition device for the game is adopted to simulate a simulative gun required in the game and a manner of taking the picture by the image recognition device is adopted to simulate a shooting action. Thus, multiple users may be equipped with image recognition devices respectively, and if a certain user is photographed, it is indicated that the user is shot. A special simulative gun is not required to be equipped in a game process, so that limits of simulative guns are broken, and flexibility is improved.

Referring to Fig. 8, in another embodiment, the image recognition device for the game further includes: a second acquisition module 705 and a relationship establishment module 706.

The photographing module 701 is further configured to photograph at least one game user to obtain at least one picture of the at least one game user respectively.

The second acquisition module 705 is configured to acquire body characteristic information of each game user according to the at least one picture of each game user.

The relationship establishment module 706 is configured to establish a relationship between the user identifier and body characteristic information of each game user.

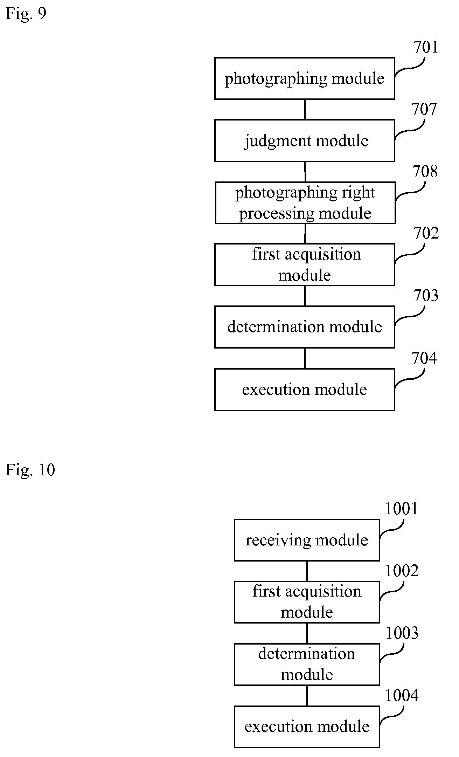

Referring to Fig. 9, in another embodiment, the image recognition device for the game further includes: a judgment module 707 and a photographing right processing module 708.

The judgment module 707 is configured to judge whether the number of pictures which have been locally taken is larger than a preset number or not.

The photographing right processing module 708 is configured to, when the number of the pictures which have been taken is determined to be larger than the preset number, disable a photographing right, and enable the photographing right after a preset time length.

In another embodiment, the first acquisition module 702 is further configured to determine a preset central area of the picture to be matched, and perform characteristic extraction on the preset central area to obtain the first body characteristic information.

In another embodiment, the relationship further includes a relationship among a user identifier, a body part and body characteristic information; and

the determination module 703 is further configured to determine a first body part and first user identifier corresponding to the first body characteristic information according to the relationship.

The execution module 704 is further configured to execute shooting processing operation corresponding to the first body part on the first user identifier.

In another embodiment, the execution module 704 is further configured to disable a game right of the first user identifier; or, reduce a life value of the first user identifier, and if the life value of the first user identifier is lower than a preset threshold value, disable the game right of the first user identifier.

Fig. 10 is a block diagram illustrating an image recognition device for a game, according to another exemplary embodiment. The image recognition device for the game may be applied to a server. As shown in Fig. 10, the image recognition device for the game includes a receiving module 1001, a first acquisition module 1002, a determination module 1003 and an execution module 1004.

The receiving module 1001 is configured to receive a picture to be matched which is taken by a terminal.

The first acquisition module 1002 is configured to acquire first body characteristic information corresponding to the picture to be matched.

The determination module 1003 is configured to determine a first user identifier corresponding to the first body characteristic information according to a pre-established relationship between a user identifier and body characteristic information.

The execution module 1004 is configured to execute shooting processing operation on the first user identifier.

From the above, according to the device provided by the embodiment, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiment, a shooting action is simulated by acquiring the picture taken by the terminal. Thus, multiple users may upload the pictures taken by the terminals to the server respectively, and the server performs image processing on the acquired pictures to indicate that a certain photographed user is shot. A special simulative gun is not required to be equipped in a game, so that limits of simulative guns are broken, and flexibility is improved.

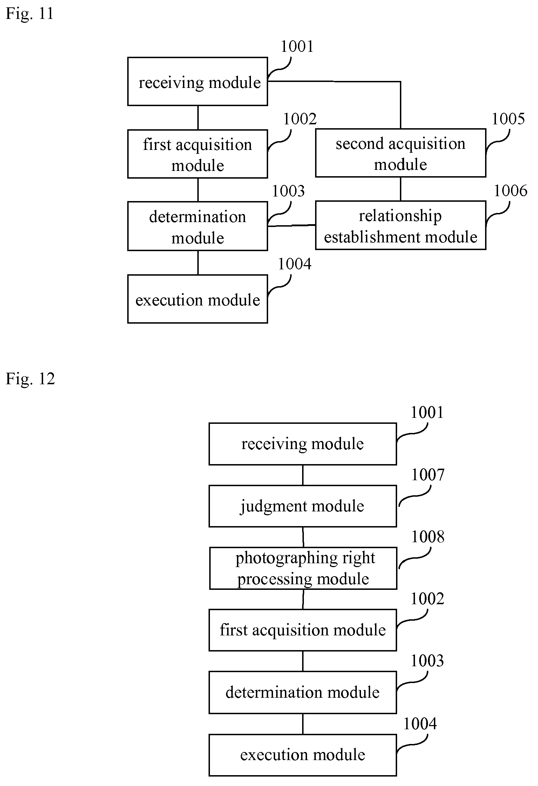

Referring to Fig. 11, in another embodiment, the image recognition device for the game further includes a second acquisition module 1005 and a relationship establishment module 1006.

The receiving module 1001 is further configured to receive at least one picture sent by the terminal, the at least one picture being obtained by photographing a current game user by the terminal.

The second acquisition module 1005 is configured to acquire body characteristic information of the current game user according to the at least one picture.

The relationship establishment module 1006 is configured to establish a relationship between a user identifier of the terminal and the body characteristic information.

Referring to Fig. 12, in another embodiment, the image recognition device for the game further includes a judgment module 1007 and a photographing right processing module 1008.

The judgment module 1007 is configured to judge whether the number of pictures which have been taken by the terminal is larger than a preset number or not.

The photographing right processing module 1008 is configured to, when the number of the pictures which have been taken by the terminal is determined to be larger than the preset number, disable a photographing right of the terminal, and enable the photographing right of the terminal after a preset time length.

In another embodiment, the first acquisition module 1002 is further configured to determine a preset central area of the picture to be matched, and perform characteristic extraction on the preset central area to obtain the first body characteristic information.

In another embodiment, the relationship further includes a relationship among a user identifier, a body part and body characteristic information.

The determination module 1003 is further configured to determine a first body part and first user identifier corresponding to the first body characteristic information according to the relationship.

The execution module 1004 is further configured to execute shooting processing operation corresponding to the first body part on the first user identifier.

In another embodiment, the execution module 1004 is further configured to disable a game right of the first user identifier; or, reduce a life value of the first user identifier, and if the life value of the first user identifier is lower than a preset threshold value, disable the game right of the first user identifier.

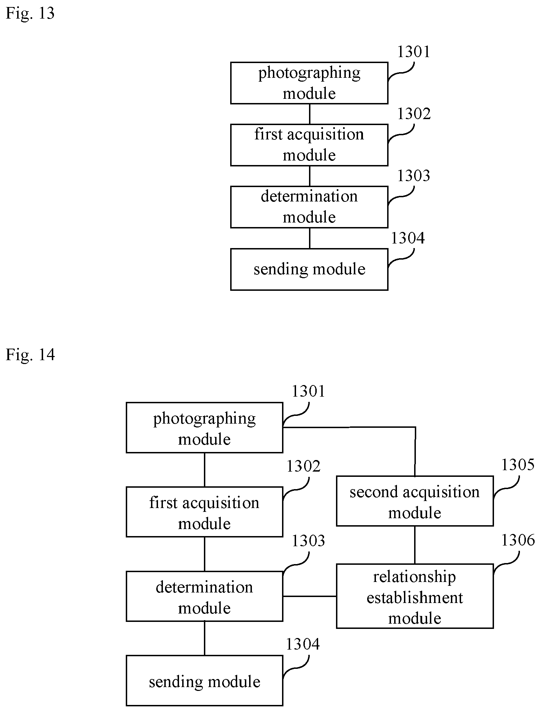

Fig. 13 is a block diagram of an image recognition device for a game, according to another exemplary embodiment. The image recognition device for the game may be applied to a terminal. As shown in Fig. 13, the image recognition device for the game includes a photographing module 1301, a first acquisition module 1302, a determination module 1303 and a sending module 1304.

The photographing module 1301 is configured to take a picture to be matched.

The first acquisition module 1302 is configured to acquire first body characteristic information corresponding to the picture to be matched.

The determination module 1303 is configured to determine a first user identifier corresponding to the first body characteristic information according to a pre-established relationship between a user identifier and body characteristic information.

The sending module 1304 is configured to send the first user identifier to a server to enable the server to execute shooting processing operation on the first user identifier.

From the above, according to the device provided by the embodiment, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiment, the terminal is adopted to simulate a simulative gun required in the game and a manner of taking the picture by the terminal is adopted to simulate a shooting action. Thus, multiple users may be equipped with terminals respectively, and if a certain user is photographed, it is indicated that the user is shot. A special simulative gun is not required to be equipped in a game, so that limits of simulative guns are broken, and flexibility is improved.

Referring to Fig. 14, in another embodiment, the image recognition device for the game further includes a second acquisition module 1305 and a relationship establishment module 1306.

The photographing module 1301 is further configured to photograph at least one game user to obtain at least one picture of the at least one game user respectively.

The second acquisition module 1305 is configured to acquire body characteristic information of each game user according to the at least one picture of each game user.

The relationship establishment module 1306 is configured to establish a relationship between a user identifier and body characteristic information of each game user.

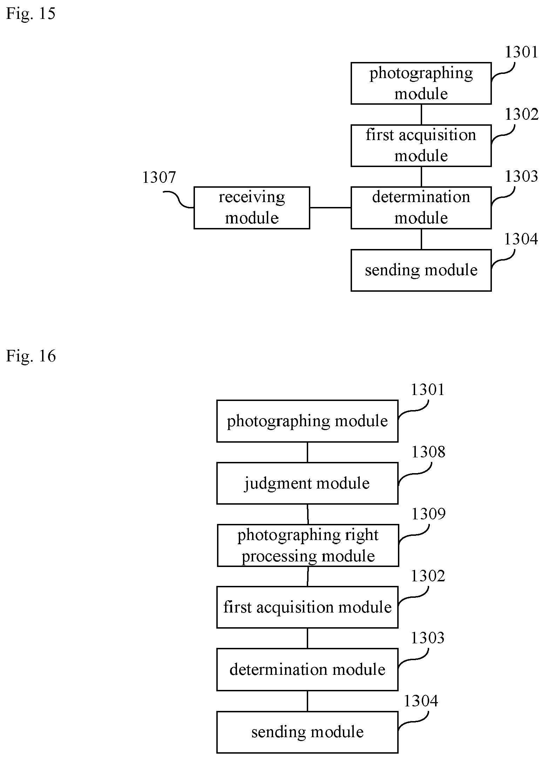

Referring to Fig. 15, in another embodiment, the image recognition device for the game further includes a receiving module 1307.

The photographing module 1301 is further configured to photograph a current game user to obtain at least one picture of the current game user.

The sending module 1304 is further configured to send the at least one picture of the current game user to the server to enable the server to acquire body characteristic information of the current game user according to the at least one picture of the current game user and establish a relationship between a local user identifier and the body characteristic information.

The receiving module 1307 is further configured to receive the relationship established by the server.

Referring to Fig. 16, in another embodiment, the image recognition device for the game further includes a judgment module 1308 and a photographing right processing module 1309.

The judgment module 1308 is configured to judge whether the number of pictures which have been taken is larger than a preset number or not.

The photographing right processing module 1309 is configured to, when the number of the pictures which have been taken is determined to be larger than the preset number, disable a photographing right, and enable the photographing right after a preset time length.

In another embodiment, the first acquisition module 1302 is further configured to determine a preset central area of the picture to be matched, and perform characteristic extraction on the preset central area to obtain the first body characteristic information.

The relationship further includes a relationship among a user identifier, a body part and body characteristic information; and
the determination module 1303 is further configured to determine a first body part and first user identifier corresponding to the first body characteristic information according to the relationship.

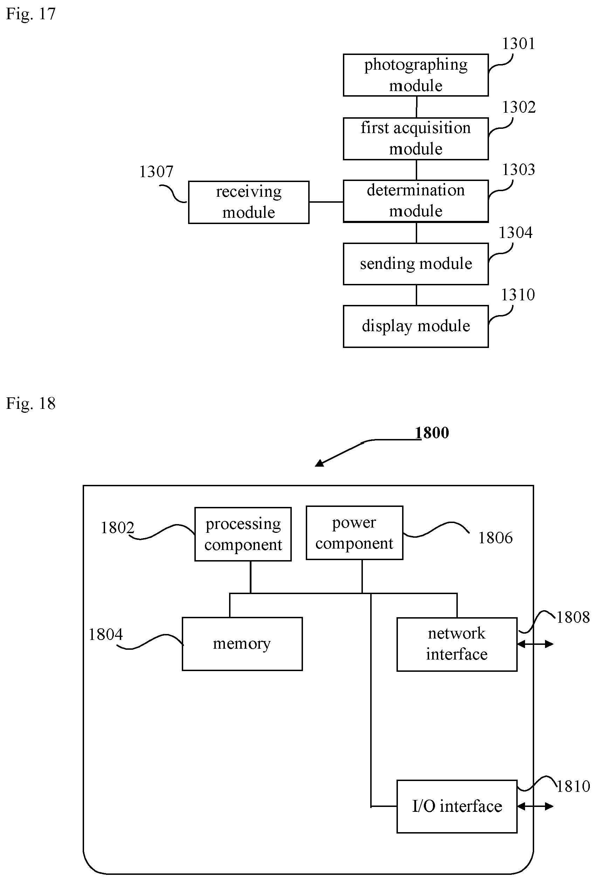

Referring to Fig. 17, in another embodiment, the image recognition device for the game further includes the receiving module 1307 and a display module 1310.

The receiving module 1307 is further configured to receive a message of disabling a game right from the server, the message being sent when the server disables the game right according to the first user identifier.

The display module 1310 is configured to display the message.

Fig. 18 is a block diagram illustrating an image recognition device for a game, according to another exemplary embodiment. For example, the device 1800 may be provided as a server. Referring to Fig. 18, the device 1800 includes a processing component 1802, which further includes one or more processors, and a memory resource represented by a memory 1804, configured to store instructions such as application programs executable by the processing component 1802. The application programs stored in the memory 1804 may include one or more modules of which each corresponds to a set of instructions. In addition, the processing component 1802 is configured to execute the instructions to implement the abovementioned image recognition method for the game.

The device 1800 may further include a power component 1806 configured to execute power mangement of the device 1800, a wired or wireless network interface 1808 configured to connect the device 1800 to a network, and an Input/Output (I/O) interface 1810. The device 1800 may be operated on the basis of an operating system stored in the memory 1804, such as Windows ServerTM, Mac OS XTM, UnixTM, LinuxTM, FreeBSDTM or the like.

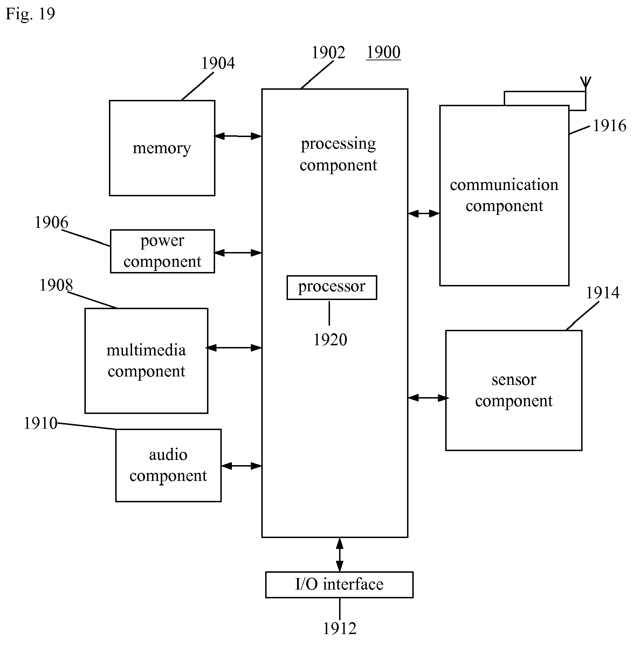

Fig. 19 is a block diagram illustrating an image recognition device 1900 for a game, according to an exemplary embodiment. For example, the device 1900 may be a mobile phone, a digital broadcast terminal, a messaging device, a gaming console, a tablet, a personal digital assistant and the like.

Referring to Fig. 19, the device 1900 may include one or more of the following components: a processing component 1902, a memory 1904, a power component 1906, a multimedia component 1908, an audio component 1910, an I/O interface 1912, a sensor component 1914, and a communication component 1916.

The processing component 1902 typically controls overall operations of the device 1900, such as the operations associated with display, telephone calls, data communications, camera operations, and recording operations. The processing component 1902 may include one or more processors 1920 to execute instructions to perform all or part of the steps in the abovementioned methods. Moreover, the processing component 1902 may include one or more modules which facilitate interaction between the processing component 1902 and the other components. For instance, the processing component 1902 may include a multimedia module to facilitate interaction between the multimedia component 1908 and the processing component 1902.

The memory 1904 is configured to store various types of data to support the operation of the device 1900. Examples of such data include instructions for any applications or methods operated on the device 1900, contact data, phonebook data, messages, pictures, video, etc. The memory 1904 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

The power component 1906 provides power for various components of the device 1900. The power component 1906 may include a power management system, one or more power supplies, and other components associated with the generation, management and distribution of power for the device 1900.

The multimedia component 1908 includes a screen providing an output interface between the device 1900 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1908 includes a front camera and/or a rear camera. The front camera and/or the rear camera may receive external multimedia data when the device 1900 is in an operation mode, such as a photographing mode or a video mode. Each of the front camera and the rear camera may be a fixed optical lens system or have focusing and optical zooming capabilities.

The audio component 1910 is configured to output and/or input an audio signal. For example, the audio component 1910 includes a microphone (MIC), and the MIC is configured to receive an external audio signal when the device 1900 is in the operation mode, such as a call mode, a recording mode and a voice recognition mode. The received audio signal may be further stored in the memory 1904 or sent through the communication component 1916. In some embodiments, the audio component 1910 further includes a speaker configured to output the audio signal.

The I/O interface 1912 provides an interface between the processing component 1902 and a peripheral interface module, and the peripheral interface module may be a keyboard, a click wheel, a button and the like. The button may include, but are not limited to: a home button, a volume button, a starting button and a locking button.

The sensor component 1914 includes one or more sensors configured to provide status assessment in various aspects for the device 1900. For instance, the sensor component 1914 may detect an on/off status of the device 1900 and relative positioning of components, such as a display and small keyboard of the device 1900, and the sensor component 1914 may further detect a change in a position of the device 1900 or a component of the device 1900, presence or absence of contact between the user and the device 1900, orientation or acceleration/deceleration of the device 1900 and a change in temperature of the device 1900. The sensor component 1914 may include a proximity sensor configured to detect presence of an object nearby without any physical contact. The sensor component 1914 may also include a light sensor, such as a Complementary Metal Oxide Semiconductor (CMOS) or Charge Coupled Device (CCD) image sensor, configured for use in an imaging application. In some embodiments, the sensor component 1914 may also include an acceleration sensor, a gyroscope sensor, a magnetic sensor, a pressure sensor or a temperature sensor.

The communication component 1916 is configured to facilitate wired or wireless communication between the device 1900 and another device. The device 1900 may access a communication-standard-based wireless network, such as a Wireless Fidelity (WiFi) network, a 2nd-Generation (2G) or 3rd-Generation (3G) network or a combination thereof. In an exemplary embodiment, the communication component 1916 receives a broadcast signal or broadcast associated information from an external broadcast management system through a broadcast channel. In an exemplary embodiment, the communication component 1916 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In the exemplary embodiment, the device 1900 may be implemented by one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to implement the abovementioned methods.

In the exemplary embodiment, there is also provided a non-transitory computer-readable storage medium including instructions, such as, the memory 1904 including instructions, and the instructions may be executed by the processor 1920 of the device 1900 to implement the abovementioned methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

In an exemplary embodiment, there is also provided a non-transitory computer-readable storage medium, and when instructions in the storage medium are executed by the processor of the terminal, the terminal may execute the abovementioned image recognition methods for the game.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

### INDUSTRIAL APPLICABILITY

According to the methods and devices provided by the embodiments of the present disclosure, the relationship between the user identifier and the body characteristic information is pre-established, and during the game, the picture to be matched is taken, the first body characteristic information corresponding to the picture to be matched is acquired, the first user identifier corresponding to the first body characteristic information is determined according to the relationship, and shooting processing operation is executed on the first user identifier. According to the embodiments, the image recognition device is adopted to simulate a simulative gun required in the game and a manner of taking the picture by the image recognition device is adopted to simulate a shooting action. Thus, multiple users may be equipped with image recognition devices respectively. As such, if a certain user is photographed, it is indicated that the user is shot. A special simulative gun is not required to be equipped in a game process, so that limits of simulative guns are broken, and flexibility is improved.

## Claims

1. An image recognition method for a game, **characterized in that**, the method comprises:
when a picture to be matched is taken, acquiring (101) first body characteristic information corresponding to the picture to be matched;
determining (102) a first user identifier corresponding to the first body characteristic information according to a pre-established relationship between a user identifier and body characteristic information; and
executing (103) shooting processing operation on the first user identifier.

2. The method according to claim 1, further comprising:
photographing (201) at least one game user to obtain at least one picture of the at least one game user respectively;
acquiring (202) body characteristic information of each game user according to at least one picture of each game user; and
establishing (202) a relationship between the user identifier and body characteristic information of each game user.

3. The method according to claim 1, further comprising:
judging whether the number of pictures which have been locally taken is larger than a preset number or not;
when the number of the pictures which have been taken is determined to be larger than the preset number, disabling a photographing right; and
enabling the photographing right after a preset time length.

4. The method according to claim 1, wherein the step of executing (103) shooting processing operation on the first user identifier comprises:
disabling a game right of the first user identifier; or,
reducing a life value of the first user identifier, and in the case that the life value of the first user identifier is lower than a preset threshold value, disabling the game right of the first user identifier.

5. An image recognition method for a game, **characterized in that**, the method comprises:
receiving (501) a picture to be matched which is taken by a terminal;
acquiring (502) first body characteristic information corresponding to the picture to be matched;
determining (503) a first user identifier corresponding to the first body characteristic information according to a pre-established relationship between a user identifier and body characteristic information; and
executing (504) shooting processing operation on the first user identifier.

6. The method according to claim 5, further comprising:
receiving at least one picture sent by the terminal, the at least one picture being obtained by photographing a current game user by the terminal;
acquiring body characteristic information of the current game user according to the at least one picture; and
establishing a relationship between a user identifier of the terminal and the body characteristic information.

7. The method according to claim 5, further comprising:
judging whether the number of pictures which have been taken by the terminal is larger than a preset number or not;
when the number of the pictures which have been taken by the terminal is determined to be larger than the preset number, disabling a photographing right of the terminal; and
enabling the photographing right of the terminal after a preset time length.

8. An image recognition method for a game, **characterized in that**, the method comprises:
when a picture to be matched is taken, acquiring (401) first body characteristic information corresponding to the picture to be matched;
determining (402) a first user identifier corresponding to the first body characteristic information according to a pre-established relationship between a user identifier and body characteristic information; and
sending (403) the first user identifier to a server to enable the server to execute shooting processing operation on the first user identifier.

9. The method according to claim 8, further comprising:
photographing at least one game user to obtain at least one picture of the at least one game user respectively;
acquiring body characteristic information of each game user according to at least one picture of each game user; and
establishing a relationship between a user identifier and body characteristic information of each game user.

10. The method according to claim 8, further comprising:
photographing a current game user to obtain at least one picture of the current game user;
sending the at least one picture of the current game user to the server to enable the server to acquire body characteristic information of the current game user according to the at least one picture of the current game user and establish a relationship between a local user identifier and the body characteristic information; and
receiving the relationship established by the server.

11. The method according to claim 8, further comprising:
judging whether the number of pictures which have been taken is larger than a preset number or not;
when the number of the pictures which have been taken is determined to be larger than the preset number, disabling a photographing right; and
enabling the photographing right after a preset time length.

12. The method according to claim 8, further comprising:
receiving a message of disabling a game right from the server, the message being sent when the server disables the game right according to the first user identifier; and
displaying the message.

13. An image recognition device for a game, **characterized in that**, the device comprises:
a photographing module (701), configured to take a picture to be matched;
a first acquisition module (702), configured to acquire first body characteristic information corresponding to the picture to be matched;
a determination module (703), configured to determine a first user identifier corresponding to the first body characteristic information according to a pre-established relationship between a user identifier and body characteristic information; and
an execution module (704), configured to execute shooting processing operation on the first user identifier.

14. An image recognition device for a game, **characterized in that**, the device comprises:
a receiving module (1001), configured to receive a picture to be matched which is taken by a terminal;
a first acquisition module (1002), configured to acquire first body characteristic information corresponding to the picture to be matched;
a determination module (1003), configured to determine a first user identifier corresponding to the first body characteristic information according to a pre-established relationship between a user identifier and body characteristic information; and
an execution module (1004), configured to execute shooting processing operation on the first user identifier.

15. An image recognition device for a game, **characterized in that**, the device comprises:
a photographing module (1301), configured to take a picture to be matched;
a first acquisition module (1302), configured to acquire first body characteristic information corresponding to the picture to be matched;
a determination module (1303), configured to determine a first user identifier corresponding to the first body characteristic information according to a pre-established relationship between a user identifier and body characteristic information; and
a sending module (1304), configured to send the first user identifier to a server to enable the server to execute shooting processing operation on the first user identifier.
